# EUROPÄISCHE PATENTSCHRIFT

(11) **EP 2 663 836 B1**
(45) Veröffentlichungstag und Bekanntmachung des Hinweises auf die Patenterteilung: **23.11.2016**
(21) Anmeldenummer: 12701084.1
(22) Anmeldetag: 10.01.2012
(51) Int. Cl.: G01C 11/00, G01C 15/00

(54) **VERMESSUNGSGERÄT MIT EINER DYNAMISCHEN ANZIELFUNKTIONALITÄT UND ZUGEHÖRIGES VERFAHREN**
MEASURING APPLIANCE COMPRISING A DYNAMIC SIGHTING FUNCTIONALITY AND ASSOCIATED METHOD
APPAREIL DE MESURE AYANT UNE FONCTIONNALITÉ DE CIBLAGE DYNAMIQUE ET PROCÉDÉ ASSOCIÉ

(30) Priorität: 11.01.2011 EP 11150580
(43) Veröffentlichungstag der Anmeldung: 20.11.2013
(73) Patentinhaber: Leica Geosystems AG, 9435 Heerbrugg (CH)
(72) Erfinder: SCHORR, Christian, CH-9000 St. Gallen (CH); SCHROEDER, Frank, CH-9000 St. Gallen (CH)
(74) Vertreter: Kaminski Harmann
(86) Internationale Anmeldenummer: PCT/EP2012/050300
(87) Internationale Veröffentlichungsnummer: WO 2012/095415

(56) Entgegenhaltungen:
- EP-A1- 0 481 278
- WO-A1-2004/036145
- DE-T5-112007 003 284
- US-A1- 2006 192 946

## Beschreibung

Die Erfindung betrifft ein Konstruktionsvermessungsgerät zum Vermessen und/oder Markieren von Raumpunkten von Oberflächen einer Konstruktion - insbesondere Innenräumen von Gebäuden - nach dem Oberbegriff des Anspruchs 1 sowie ein zugehöriges Verfahren zum manuell gesteuerten Ausrichten einer Anzieleinheit eines Vermessungsgeräts anhand eines Markierens von Displaypunkten auf einem Display nach dem Oberbegriff des Anspruchs 10 und ein zugehöriges Computerprogrammprodukt nach dem Oberbegriff des Anspruchs 15.

Aus dem Stand der Technik sind einfache Konstruktionsvermessungsgeräte mit einer Anzieleinrichtung bekannt, mithilfe derer manuell ein Raumpunkt, z.B. ein Eckpunkt, angezielt wird und die Anzielrichtung dann manuell zu einem nächsten zu vermessenden Raumpunkt, z.B. einem weiteren Eckpunkt, verändert wird.

Die DE 196 48 626 beispielsweise offenbart ein Verfahren und eine Vorrichtung zur Flächenvermessung mit einem Laserentfernungsmesser mit einem Lasersender und einem Laserempfänger. Der Laserentfernungsmesser ist auf einem Stativ montiert. Die Vorrichtung umfasst des Weiteren eine Kipp- und Dreheinrichtung zur Ausrichtung und Richtungsmessung, ein Zielfernrohr sowie eine elektronische Auswerteeinheit zur Winkeldaten-, Entfernungsdatenerfassung und Datenübergabe an einen Computer. Für die Vermessung eines Raumes wird das Gerät an einer zentralen Stelle des Raumes positioniert, von der aus alle zu erfassenden Raum- und/oder Flächeneckpunkte mit dem Laserstrahl anvisiert und beaufschlagt werden können. Gemäss der Offenbarung der DE 196 48 626 werden die zu vermessenden Raumpunkte dabei jeweils einzeln anvisiert, gegebenenfalls bei grösserer Entfernung mit Unterstützung der Beobachtung durch ein Zielfernrohr. Eine automatisierte sequentielle Vermessung mehrerer Raumpunkte, zu vergleichen beispielsweise mit einem Scan, wird in der DE 196 48 626 nicht offenbart.

Eine ähnliche Vorrichtung und zugehörige Vermessungsmethode werden in der DE 44 43 413, der ergänzenden Offenlegungsschrift DE 195 45 589 und der WO 96/18083, welche die Priorität der DE 44 43 413 beansprucht, offenbart. Darin werden ein Verfahren und eine Vorrichtung zum Vermessen und Markieren an distanzierten Linien, Flächen oder in zumindest teilweise geschlossenen Räumen beschrieben. Einer oder mehrere relevante Raumpunkte werden nach jeweils zwei Raumwinkeln und der Entfernung gegenüber einem Bezugsort mittels eines kardanisch gelagerten Laserdistanzmessgeräts vermessen. Das Laserdistanzmessgerät ist um zwei zueinander senkrechte Achsen, welche mit Winkelmessern ausgestattet sind, schwenkbar. Gemäss einer in diesen Schriften beschriebenen Ausführungsform werden zu vermessende Raumpunkte von Hand angesteuert, aus den Vermessungsdaten, basierend auf einem vorgegebenen Relativbezug zwischen Vermessung und Markierung, Markierungspunkte berechnet, die dann von der Mess- und Markierungsvorrichtung selbständig angefahren werden.

Es wird jedoch auch in diesem Dokument keine automatisierte sequentielle Vermessung mehrerer Raumpunkte, zu vergleichen beispielsweise mit einem Scan, offenbart.

In der EP 1 733 185 werden eine Vorrichtung und ein Verfahren offenbart, womit speziell Kanten auf einer polygonalen, ansonsten ebenen Oberfläche genau vermessen werden sollen. Es wird jedoch keine automatisierte sequentielle Vermessung mehrerer Raumpunkte offenbart.

Bekannte Konstruktionsvermessungsgeräte umfassen typischerweise eine Basis, ein an der Basis um eine Drehachse drehbar gelagertes Oberteil und eine um eine Schwenkachse schwenkbar gelagerte Anzieleinheit mit einer zur Emission eines Laserstrahls ausgebildeten Laserquelle und einem bildgebenden Detektor, beispielsweise ausgestattet mit einer Ausrichtungsanzeigefunktionalität zur Angabe einer Ausrichtung der Anzieleinheit auf einen Raumpunkt als Anzielpunkt, sowie einem Entfernungsbestimmungsdetektor zur Bereitstellung einer Distanzmessfunktionalität. Bei der Ausrichtungsanzeigefunktionalität kann es sich beispielsweise um ein Fadenkreuz im Sucher einer Kamera als bildgebendem Detektor handeln.

Moderne, automatisierte Konstruktionsvermessungsgeräte umfassen des Weiteren Drehantriebe, welche das Oberteil bzw. die Anzieleinheit motorisiert antreibbar machen, Winkelmesser und gegebenenfalls Neigungssensoren zur Bestimmung der räumlichen Ausrichtung der Anzieleinheit, sowie eine Auswerte- und Steuereinheit, welche mit der Laserquelle, dem Entfernungsbestimmungsdetektor sowie den Winkelmessern und gegebenenfalls Neigungssensoren verbunden ist.

Dabei ist die Auswerte- und Steuereinheit beispielsweise mit einem Display mit Eingabemitteln zur Eingabe von Steuerbefehlen eines Benutzers auf dem Display und zur Darstellung eines Bildes des bildgebenden Detektors bzw. der Kamera auf dem Display ausgestattet, wobei die Ausrichtung der Anzieleinheit mittels der Ausrichtungsanzeigefunktionalität auf dem Display z.B. mittels Überblendung anzeigbar ist. Es sind Funktionalitäten bekannt, bei denen die Eingabemittel auf dem Display als vier grosse flächige Pfeile ausgebildet sind, deren Markierung bzw. Berührung es einem Benutzer ermöglichen, die Ausrichtung der Anzieleinheit in horizontaler oder vertikaler Richtung zu verändern. Eine Ausrichtungsänderung in beliebiger Richtung, nicht ausschliesslich in horizontaler oder vertikaler Richtung, kann basierend auf einer solchen Funktionalität jedoch zeitaufwendig und schwierig handhabbar sowie wenig intuitiv zu bedienen sein.

DE112007003284, WO2004036145, EP0481278 und US2006/192946 offenbaren jeweils Vermessungsgeräte mit Eingabemitteln mittels Markierung von Bildpunkten auf einem Display.

Aufgabe der Erfindung ist die Bereitstellung eines Vermessungsgeräts und eines zugehörigen Verfahrens zum Vermessen und/oder Markieren von Raumpunkten auf Oberflächen einer Konstruktion mit einer verbesserten Funktionalität zur Änderung der Ausrichtung der Anzieleinheit, welche einem Benutzer einen erhöhten Bedienungskomfort bietet und insbesondere anhand welcher der Benutzer schneller den gewünschten Zielpunkt im Raum - zumindest grob - anfahren kann.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen sowie der Beschreibung einschliesslich der Figurenbeschreibungen zu entnehmen.

Gegenstand der Erfindung ist ein Vermessungsgerät (insbesondere Konstruktionsvermessungsgerät) zum Vermessen und/oder Markieren von Raumpunkten auf Oberflächen einer Konstruktion, insbesondere Innenräumen von Gebäuden. Das Gerät umfasst eine Basis und ein einer gegenüber der Basis dreh- und schwenkbaren, Distanzmessfunktionalität bereitstellenden Anzieleinheit mit einer zur Emission eines Laserstrahls in Richtung einer Zielachse ausgebildeten Laserquelle und einem Laserlichtdetektor sowie mit einer in Richtung der Zielachse ausgerichteten integrierten digitalen Kamera.

Insbesondere ist ein an der Basis um eine Drehachse innerhalb eines Winkelbereichs eines Azimutal- bzw. Horizontalwinkels drehbar gelagertes Oberteil vorhanden und ist die Anzieleinheit am Oberteil um eine Schwenkachse innerhalb eines Winkelbereichs eines Elevations- bzw. Vertikalwinkels schwenkbar gelagert angeordnet.

Das erfindungsgemässe Vermessungsgerät umfasst des Weiteren eine Auswerte- und Steuereinheit, ein Display zur Darstellung eines Bildes der Kamera sowie Eingabemittel zur Markierung von Displaypunkten auf dem Display (sodass durch einen Benutzer z.B. Steuerbefehle eingegeben werden können). Die Eingabemittel sind dabei insbesondere derart gestaltet, dass - mit einer bestimmten Auflösung - Punkte auf dem gesamten Display (d.h. auf der gesamten Displayfläche) markierbar sind (z.B. analog zur Computermaus, einem Touch-Screen, einem Track-Ball, o.ä.). Wie dem Fachmann bekannt kann dabei die Auflösung von markierbaren Displaypunkten mit der Bildschirmauflösung (Bildschirm-Pixel) an sich zwar im Speziellen übereinstimmen jedoch kann die genauso die Auflösung von markierbaren Displaypunkten auch geringer wie die Auflösung von überhaupt auf dem Bildschirm darstellbarer Pixel sein.

Der jeweils aktuell mit der Zielachse anvisierte Raumpunkt kann dabei im Betriebszustand auf dem Display im Bild abgebildet werden (in einem Ziel-Bildpunkt), insbesondere indiziert anhand eines Fadenkreuzes.

Das Gerät umfasst einen ersten und zweiten Drehantrieb, welche das Oberteil bzw. die Anzieleinheit antreibbar bzw. in einem Azimut- und einem Elevationswinkel ausrichtbar machen. Eine räumliche Ausrichtung der Anzieleinheit gegenüber der Basis ist über zwei Winkelmesser zur Bestimmung der horizontalen und vertikalen Ausrichtung, d.h. des Azimut- und des Elevationswinkels, erfassbar. Die Auswerte- und Steuereinheit ist mit der Laserquelle, dem Laserlichtdetektor sowie den Winkelmessern verbunden, um eine erfasste Distanz einer entsprechenden Ausrichtung (d.h. dabei erfassten Azimut- und Elevationswinkeln) zuzuordnen und somit Koordinaten für Raumpunkte zu bestimmen. Zudem ist die Auswerte- und Steuereinheit auch mit der Kamera verbunden.

Zusätzlich kann das Gerät - insbesondere in die Basis des Geräts integriert - optional mit Neigungssensormittel ausgestattet sein, deren Messdaten dann ebenfalls an die Auswerte- und Steuereinheit übermittelt werden. Damit kann zusätzlich die aktuelle Ausrichtung des Geräts (d.h. eine Neigung der Basis) bezüglich des Schwerefeld-Vektors der Erde bestimmt und zur Kompensation einer nicht exakt horizontal erfolgten Aufstellung des Geräts verwendet werden. Wie dem Fachmann bekannt, können die Neigungssensormittel dabei dazu ausgebildet sein, die Neigung gegenüber dem Schwerefeld (bzw. gegenüber einer senkrecht zum Schwerefeld ausgerichteten Horizontalebene) in zwei Richtungen (d.h. um zwei Achsen) zu bestimmen. Beispielsweise können dafür zwei ein-achsige Neigungssensoren oder ein zwei-achsiger Neigungssensor verwendet werden (wie optoelektronische Libellensensoren, ein optoelektronischer Öltopf oder eine optoelektronische Dosenlibelle). Ein Beispiel für einen solchen öltopfartigen Neigungssensor, mit welchem die Neigung zumindest um zwei Achsen bestimmen kann, ist detailliert in der Europäischen Patentanmeldung mit dem Anmeldungs-Aktenzeichen EP 10173726.0 beschrieben.

Erfindungsgemäss weist das Konstruktionsvermessungsgerät eine Funktionalität (dynamische Anzielfunktionalität) auf, in deren Rahmen dynamisch in Abhängigkeit von
- einer aktuellen Richtung und
- einem aktuellen Abstand
von einem definierten zentralen Anker-Displaypunkt zu einem aktuell markierten Displaypunkt die Ausrichtung der Anzieleinheit durch den ersten bzw. zweiten Drehantrieb geändert wird, wobei
- die jeweils aktuelle Richtung eine Ausrichtungsänderungs-Richtung und
- der jeweils aktuelle Abstand eine Ausrichtungsänderungs-Geschwindigkeit
für das Ändern der Ausrichtung der Anzieleinheit vorgibt.

Insbesondere kann jener Displaypunkt als der Anker-Displaypunkt definiert sein, der die Position der Zielachse im Bild und somit einen Ziel-Bildpunkt repräsentiert, insbesondere wobei dieser auf dem Display durch ein dem Bild überlagert darstellbares Fadenkreuz indiziert wird. Alternativ kann im Rahmen der Funktionalität jedoch auch vorgesehen sein, dass der Benutzer selbst einen beliebigen Displaypunkt als den Anker-Displaypunkt definieren kann.

Die Funktionalität kann dabei derart ausgestaltet sein, dass diese durch Markieren des den Ziel-Bildpunkt darstellenden Displaypunkts bzw. des Fadenkreuzes aktivierbar ist.

Vorzugsweise ist das Display als ein berührungssensitiver Touch-Bildschirm (Touch-Screen) ausgebildet, auf dem Displaypunkte auf der gesamten Fläche des Displays durch Berührung markierbar sind, und somit die Eingabemittel bereitgestellt werden.

Erfindungsgemäss erfolgt die Änderung der Ausrichtung der Anzieleinheit in horizontaler und vertikaler Richtung entsprechend der Richtung vom definierten zentralen Anker-Displaypunkt zu dem jeweils aktuell markierten Bildpunkt. Dabei wird bevorzugt, dass die Ausrichtungsänderung mit einer maximalen Geschwindigkeit bei einem maximalen Abstand des markierten Bildpunkts zum Ankerpunkt erfolgt und die Geschwindigkeit der Ausrichtungsänderung gleich Null ist, d.h. dass keine Richtungsänderung erfolgt, wenn der erste und der zweite markierte Bildpunkt zusammenfallen, d.h. identisch sind.

Gemäss einer möglichen Ausführungsform des erfindungsgemässen Konstruktionsvermessungsgeräts ist das Display mittels eines virtuellen Liniennetzes in virtuelle Sektoren eingeteilt, welche durch konzentrische Kreislinien um den Anker-Displaypunkt (wie z.B. den Fadenkreuzmittelpunkt) und diese Kreislinien schneidende, vom Anker-Displaypunkt ausgehende Radiallinien gebildet werden. Dabei entsprechen die Sektoren digitalisierten Unterschieden für eine Änderung der Ausrichtung der Anzieleinheit von dem ersten anvisierten Raumpunkt auf andere Raumpunkte in horizontaler und vertikaler Richtung, und die Änderung der Ausrichtung der Anzieleinheit wird solange vollzogen, wie der andere Bildpunkt in einem Sektor kontinuierlich markiert wird.

Gemäss dieser Ausführungsform der Erfindung entsprechen die konzentrischen Kreislinien um den Anker-Displaypunkt unterschiedlichen Entfernungen zum aktuell markierten Bildpunkt, womit Geschwindigkeitsstufen für die Richtungsänderung der Anzieleinheit festgelegt werden, wobei äussere Kreislinien maximalen Geschwindigkeitsstufen entsprechen, so dass die Richtungsänderung bei Markierung äusserer Bildpunkte, nach Aktivierung der dynamischen Anzielfunktionalität, mit einer festgelegten maximalen Geschwindigkeit erfolgt, so lange wie dieser andere Bildpunkt markiert wird.

Typischerweise umfasst die Distanzmessfunktionalität einen elektronischen Distanzmesser.

Optional kann das virtuelle Liniennetz für einen Benutzer sichtbar auf dem Display einem aktuellen Kamerabild überlagert darstellbar sein.

Ein weiterer Gegenstand der Erfindung ist ein Verfahren zum manuell gesteuerten Ausrichten einer Anzieleinheit eines Vermessungsgeräts anhand eines Markierens von Displaypunkten auf einem Display, wobei das Vermessungsgerät - wie zuvor beschrieben - aufweist:
- eine Basis,
- die gegenüber der Basis dreh- und schwenkbare, Distanzmessfunktionalität bereitstellende Anzieleinheit mit einer zur Emission eines Laserstrahls in Richtung einer Zielachse ausgebildeten Laserquelle und einem Laserlichtdetektor sowie mit einer in Richtung der Zielachse ausgerichteten integrierten digitalen Kamera,

- einer Auswerte- und Steuereinheit,
- das Display zur Darstellung eines Bildes der Kamera, und
- Eingabemitteln zur Markierung der Displaypunkte,
wobei
- ein erster und ein zweiter Drehantrieb die Anzieleinheit antreib- und ausrichtbar machen,
- eine räumliche Ausrichtung der Anzieleinheit gegenüber der Basis über zwei Winkelmesser erfassbar ist und
- die Auswerte- und Steuereinheit mit der Laserquelle, dem Laserlichtdetektor sowie den Winkelmessern verbunden ist, um eine erfasste Distanz einer entsprechenden Ausrichtung zuzuordnen und somit Koordinaten für Raumpunkte zu bestimmen, sowie mit der Kamera verbunden ist.

Erfindungsgemäss werden im Rahmen des Verfahrens fortlaufend
- eine aktuelle Richtung und
- ein aktueller Abstand
von einem definierten zentralen Anker-Displaypunkt zu einem aktuell markierten Displaypunkt bestimmt. In Abhängigkeit von der jeweils aktuellen Richtung und dem jeweils aktuellen Abstand wird dann die Ausrichtung der Anzieleinheit dynamisch durch den ersten bzw. zweiten Drehantrieb geändert, wobei
- die jeweils aktuelle Richtung eine Ausrichtungsänderungs-Richtung und
- der jeweils aktuelle Abstand eine Ausrichtungsänderungs-Geschwindigkeit
für das Ändern der Ausrichtung der Anzieleinheit vorgibt.

Sämtliche eingangs beschriebene Weiterbildungen bezüglich des erfindungsgemässen Vermessungsgeräts sind analog auch auf das erfindungsgemässe Verfahren anwendbar.

So kann wiederum z.B. jener Displaypunkt als der Anker-Displaypunkt definiert sein, der die Position der Zielachse im Bild und somit einen Ziel-Bildpunkt repräsentiert, insbesondere wobei dieser auf dem Display durch ein dem Bild überlagert darstellbares Fadenkreuz indiziert wird.

Ebenso kann wieder die Ausrichtungsänderungs-Richtung für das Ändern der Ausrichtung der Anzieleinheit analog gewählt werden zur jeweils bestimmten aktuellen Richtung vom Anker-Displaypunkt zum aktuell markierten Displaypunkt, wobei
- die Ausrichtungsänderungs-Richtung eine nach oben gerichtete Komponente enthält - also eine Schwenkung der Anzieleinheit um eine horizontale Schwenkachse nach oben erfolgt -, falls die aktuelle Richtung vom Anker-Displaypunkt zum aktuell markierten Displaypunkt eine nach oben zeigende Komponente enthält - also falls sich der aktuell markierte Displaypunkt auf dem Display oberhalb des Anker-Displaypunkts befindet -,
- die Ausrichtungsänderungs-Richtung eine nach unten gerichtete Komponente enthält - also eine Schwenkung der Anzieleinheit um die horizontale Schwenkachse nach unten erfolgt -, falls die aktuelle Richtung vom Anker-Displaypunkt zum aktuell markierten Displaypunkt eine nach unten zeigende Komponente enthält - also falls sich der aktuell markierte Displaypunkt auf dem Display unterhalb des Anker-Displaypunkts befindet -,
- die Ausrichtungsänderungs-Richtung eine nach links gerichtete Komponente enthält - also eine Drehung der Anzieleinheit um eine vertikale Drehachse nach links erfolgt -, falls die aktuelle Richtung vom Anker-Displaypunkt zum aktuell markierten Displaypunkt eine nach links zeigende Komponente enthält - also falls sich der aktuell markierte Displaypunkt auf dem Display links des Anker-Displaypunkts liegend befindet -, und
- die Ausrichtungsänderungs-Richtung eine nach rechts gerichtete Komponente enthält - also eine Drehung der Anzieleinheit um eine vertikale Drehachse nach rechts erfolgt -, falls die aktuelle Richtung vom Anker-Displaypunkt zum aktuell markierten Displaypunkt eine nach rechts zeigende Komponente enthält - also falls sich der aktuell markierte Displaypunkt auf dem Display rechts des Anker-Displaypunkts liegend befindet.

Des Weiteren kann die Abhängigkeit der Ausrichtungsänderungs-Geschwindigkeit vom jeweils aktuellen Abstand derart definiert sein, dass das Verfahren (d.h. Drehen und/oder Schwenken) der Anzieleinheit mit maximal verfügbarer Geschwindigkeit erfolgt, falls der aktuelle Abstand vom aktuell markierten Displaypunkt zum Anker-Displaypunkt maximal ist, und bei Zusammenfallen des aktuell markierten Displaypunkts mit dem Anker-Displaypunkt die Ausrichtungsänderungs-Geschwindigkeit gleich Null ist, d.h. dass dann in der aktuellen Ausrichtung der Anzieleinheit innegehalten wird.

Ein weiterer Gegenstand der Erfindung ist ein Computerprogrammprodukt mit Programmcode, der auf einem maschinenlesbaren Träger gespeichert ist, zur Durchführung des erfindungsgemässen Verfahrens zum manuell gesteuerten Ausrichten einer Anzieleinheit eines Vermessungsgeräts anhand eines Markierens von Displaypunkten auf einem Display, nach einer der vorgenannten Ausführungsformen, insbesondere wenn das Programm auf einer als Auswerte- und Steuereinheit des erfindungsgemässen, oben beschriebenen Vermessungsgeräts ausgebildeten elektronischen Datenverarbeitungseinheit ausgeführt wird.

Die vorliegende Erfindung erlaubt es einem Bediener in einfacher Weise die Ausrichtung der Anzieleinheit zu verändern. Eine sequentielle Eingabe von Befehlen für eine Ausrichtungsänderung in horizontaler und vertikaler Richtung ist nicht erforderlich, sondern die Anzieleinheit kann erfindungsgemäss durch einfache Markierung auf dem Display in beliebiger, z.B. diagonaler, Richtung verfahren werden (zudem können die gewählte Richtung und Geschwindigkeit für das Verfahren dynamisch durch Verschieben der Markierung (d.h. Markierung eines anderen Displaypunkts) ständig angepasst und verändert werden).

Das erfindungsgemässe Konstruktionsvermessungsgerät und das erfindungsgemässe Verfahren zum Vermessen und/oder Markieren von Raumpunkten in einer Konstruktion werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen illustrieren:
- Figur 1: eine erste Darstellung für eine mögliche Ausführungsform eines erfindungsgemässen Konstruktionsvermessungsgeräts;
- Figur 2: eine zweite Darstellung für eine mögliche Ausführungsform eines erfindungsgemässen Konstruktionsvermessungsgeräts;
- Figur 3: die Funktionsweise der dynamischen Anzielfunktionalität des erfindungsgemässen Konstruktionsvermessungsgeräts und des zugehörigen erfindungsgemässen Verfahrens anhand eines Beispiels.

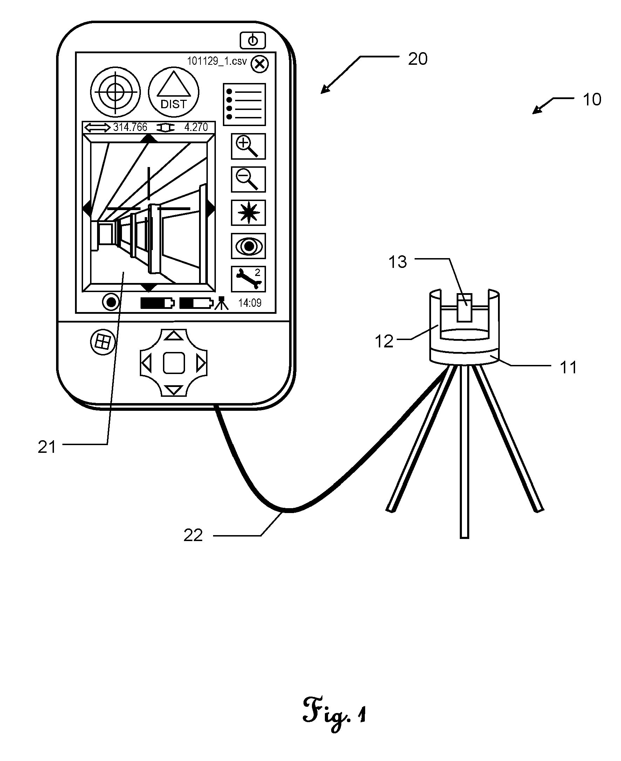

Figur 1 zeigt eine mögliche Ausführungsform eines erfindungsgemässen Konstruktionsvermessungsgeräts 10. Das System 10 umfasst eine Kontrolleinheit 20 mit einer integrierten Auswerte- und Steuereinheit zur Verarbeitung der Daten und mit einem berührungssensitiven Touch-Display 21 zur Anzeige von Daten/Kamerabilder und zur Markierung von Displaypunkten (und Eingabe von Befehlen). Die Kontrolleinheit 20 (als Benutzer-Gerät-Interface) und ein Laserlicht-Detektor bzw. Sensor kommunizieren miteinander. Die Kontrolleinheit 20 und der Laserlicht-Detektor bzw. Sensor können physisch getrennt und mittels drahtloser oder kabelgeführter Kommunikationsverbindungen 22 miteinander verbunden sein oder als eine Einheit bereitgestellt sein. Zur Ausrichtung des Laserstrahls 14 auf zu vermessende oder zu projizierende Raumpunkte kann mindestens der Laserstrahl 14 als ein Messstrahl selbst dienen. Zur Unterstützung eines Bedieners für die Anvisierung eines Raumpunkts kann das Konstruktionsvermessungsgerät 10 zusätzlich mit einer direkten optischen Anzielhilfe, z.B. einem Teleskop, ausgestattet sein.

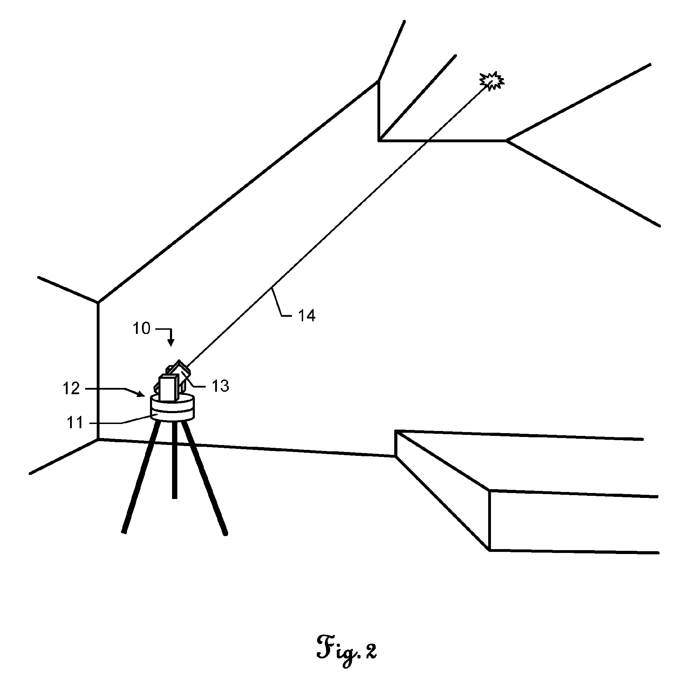

Figur 2 illustriert ein erfindungsgemässes Vermessungsgerät 10 zum Vermessen und/oder Markieren von Raumpunkten von Oberflächen einer Konstruktion, insbesondere von Innenräumen von Gebäuden.

Das Konstruktionsvermessungsgerät 10 umfasst eine Basis 11, die beispielsweise auf einem dreibeinigen Stativ steht, mit einem darauf drehbar gelagerten Oberteil 12. Eine am Oberteil 12 schwenkbar gelagerte Anzieleinheit 13 ist mit einer zu einer Emission eines Laserstrahls 14 ausgebildeten Laserquelle und einem Laserlicht-Detektor als Entfernungsbestimmungsdetektor ausgestattet und stellt damit eine Distanzmessfunktionalität bereit. Die Anzieleinheit 13 umfasst des Weiteren eine integrierte digitale Kamera.

Somit ist also die Anzieleinheit 13 gegenüber der Basis 11 dreh- und schwenkbar (insbesondere also um eine vertikale Stehachse drehbar und um eine horizontale Schwenkachse schwenkbar bzw. neigbar).

Das Konstruktionsvermessungsgerät 10 umfasst ausserdem eine nicht dargestellte Auswerte- und Steuereinheit, wobei - ebenfalls nicht dargestellt - ein erster und ein zweiter Drehantrieb das Oberteil 12 bzw. die Anzieleinheit 13 antreibbar bzw. in einem Azimut- und einem Elevationswinkel ausrichtbar machen. Die räumliche Ausrichtung der Anzieleinheit 13 gegenüber der Basis 11 ist über zwei Winkelmesser erfassbar. Zusätzlich können Neigungssensoren zur Bestimmung der Aufstell-Ausrichtung bzw. Horizontalität der Basis 11 bezüglich des Schwerefeld-Vektors der Erde vorgesehen sein. Die Auswerte- und Steuereinheit ist mit der Laserquelle, dem Laserlicht-Detektor und den Winkelmessern - sowie gegebenenfalls den Neigungssensoren - verbunden, um eine erfasste Distanz und erfasste Azimut- und Elevationswinkel einer entsprechenden Ausrichtung der Anzieleinheit 13 zuzuordnen und somit Koordinaten für Raumpunkte zu bestimmen. Ausserdem ist die Auswerte- und Steuereinheit mit der Kamera verbunden.

Der jeweils aktuell mit der Zielachse 13 anvisierte Raumpunkt kann dabei im Betriebszustand auf dem Display im Bild abgebildet werden (in einem Ziel-Bildpunkt), insbesondere indiziert anhand eines darstellbaren Fadenkreuzes.

Das Kamerabild, in welches also das Fadenkreuz an jener Stelle im Bild eingeblendet sein kann, welche mit der Zielachse korrespondiert, dient somit insbesondere zur Anzielung der gewünschten Zielpunkte im Raum und kann z.B. auf dem Display einer handhaltbaren Fernsteuereinheit für das Konstruktionsvermessungsgerät angezeigt werden (insbesondere als Live-Video-Stream).

Wie dem Fachmann bekannt, kann die Auswerte- und Steuereinheit sowie das Display und die Eingabemittel entweder direkt an der Basis des Geräts angeordnet sein und/oder in eine handhaltbare Fernsteuereinheit integriert sein. Das Vermessungsgerät kann also (entweder ausschliesslich oder zusätzlich zu einem User-Interface mit Display und Eingabemitteln, das direkt an der Basis angeordnet sein kann) eine Fernsteuereinheit mit Eingabemitteln und Display aufweisen.

Erfindungsgemäss weist das Vermessungsgerät 10 nun eine dynamische Anzielfunktionalität auf, in deren Rahmen der Benutzer manuell Steuerbefehle für das Ändern der Ausrichtung der Anzieleinrichtung gegenüber der Basis geben kann. Die dynamische Anzielfunktionalität kann derart ausgestaltet sein, dass diese durch Markieren des Ziel-Bildpunkts bzw. des Fadenkreuzes auf dem Display aktivierbar ist. Nach erfolgter Aktivierung der dynamischen Anzielfunktionalität kann ein Benutzer einen Displaypunkt 4 auf dem Display markieren. Dadurch wird eine dynamische Änderung der Ausrichtung der Anzieleinheit 13 veranlasst, indem - entsprechend der aktuell bestimmten Richtung und dem aktuell bestimmten Abstand vom definierten zentralen Anker-Displaypunkt zum jeweils aktuell markierten Displaypunkt - die azimutale und/oder elevative Ausrichtung motorangetrieben verändert wird.

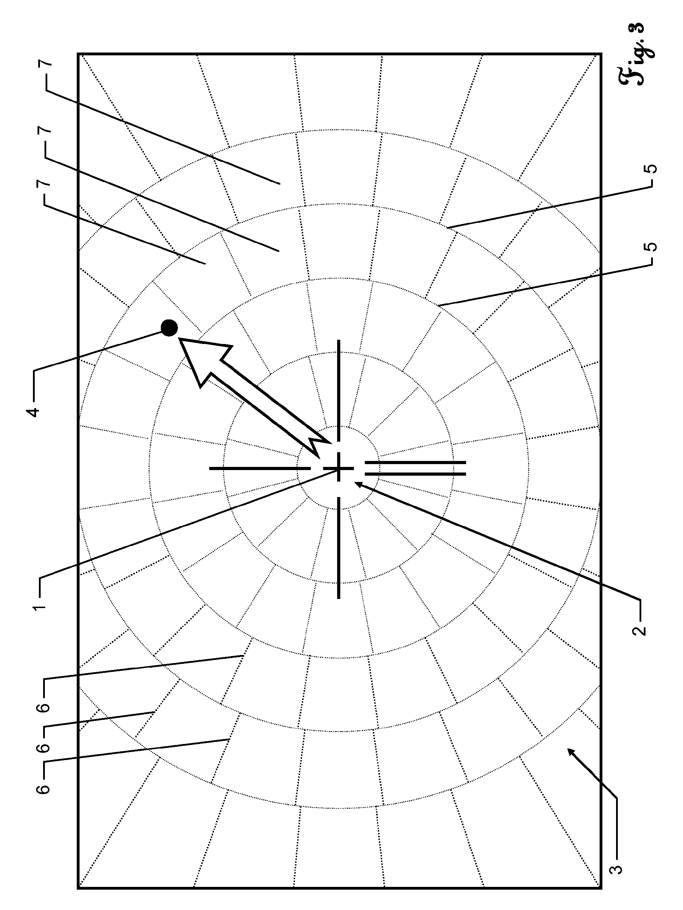

Bei Aufhebung der Markierung, beispielsweise bei Aufhebung der Berührung des Displaypunkts 4 auf einem als Touchscreen ausgebildeten Display (siehe Figur 3), wird die Verfahrung der Anzieleinheit 13 abgebrochen. Ein Benutzer kann - wenn die Funktionalität weiterhin aktiviert bleibt - jedoch jederzeit einen anderen Displaypunkt markieren bzw. berühren, um eine Änderung der Ausrichtung zu veranlassen, die dann wiederum der aktuellen Richtung und dem aktuellen Abstand vom zentralen Anker-Displaypunkt zu diesem markierten anderen Displaypunkt entspricht.

Die Ausrichtungsänderungs-Richtung für das Ändern der Ausrichtung der Anzieleinheit ist dabei dynamisch abhängig von der jeweils aktuell bestimmten Richtung vom Fadenkreuzmittelpunkt (welcher z.B. als zentraler Anker-Displaypunkt definiert sein kann) zum aktuell markierten Displaypunkt 4. D.h., dass die Ausrichtungsänderungs-Richtung dabei dynamisch eingestellt wird analog zur jeweils aktuellen Richtung vom Anker-Displaypunkt zum aktuell markierten Displaypunkt. Somit ergibt sich bei dem analog zur jeweils aktuell bestimmten Richtung (vom Fadenkreuzmittelpunkt zum aktuell markierten Displaypunkt 4) erfolgenden Ändern der Ausrichtung der Anzieleinheit, dass
- die Ausrichtungsänderungs-Richtung eine nach oben gerichtete Komponente enthaltend gewählt/eingestellt wird - also eine Schwenkung der Anzieleinheit um eine horizontale Schwenkachse nach oben erfolgt -, falls die aktuelle Richtung vom Anker-Displaypunkt zum aktuell markierten Displaypunkt eine nach oben zeigende Komponente enthält - also falls sich der aktuell markierte Displaypunkt auf dem Display oberhalb des Anker-Displaypunkts befindet -,
- die Ausrichtungsänderungs-Richtung eine nach unten gerichtete Komponente enthaltend gewählt/eingestellt wird - also eine Schwenkung der Anzieleinheit um die horizontale Schwenkachse nach unten erfolgt -, falls die aktuelle Richtung vom Anker-Displaypunkt zum aktuell markierten Displaypunkt eine nach unten zeigende Komponente enthält - also falls sich der aktuell markierte Displaypunkt auf dem Display unterhalb des Anker-Displaypunkts befindet -,
- die Ausrichtungsänderungs-Richtung eine nach links gerichtete Komponente enthaltend gewählt/eingestellt wird - also eine Drehung der Anzieleinheit um eine vertikale Drehachse nach links erfolgt -, falls die aktuelle Richtung vom Anker-Displaypunkt zum aktuell markierten Displaypunkt eine nach links zeigende Komponente enthält - also falls sich der aktuell markierte Displaypunkt auf dem Display links des Anker-Displaypunkts liegend befindet -,
- die Ausrichtungsänderungs-Richtung eine nach rechts gerichtete Komponente enthaltend gewählt/eingestellt wird - also eine Drehung der Anzieleinheit um die vertikale Drehachse nach rechts erfolgt -, falls die aktuelle Richtung vom Anker-Displaypunkt zum aktuell markierten Displaypunkt eine nach rechts zeigende Komponente enthält - also falls sich der aktuell markierte Displaypunkt auf dem Display rechts des Anker-Displaypunkts liegend befindet.

Die Ausrichtungsänderungs-Geschwindigkeit für das Ändern der Ausrichtung der Anzieleinheit wird dabei eingestellt dynamisch abhängig von der jeweils aktuell bestimmten Entfernung vom aktuell markierten Displaypunkt 4 zum Fadenkreuzmittelpunkt (welcher z.B. als zentraler Anker-Displaypunkt definiert sein kann), insbesondere wobei mit zunehmender Entfernung des aktuell markierten Displaypunkts vom Anker-Displaypunkt jeweils das Verfahren der Anzieleinheit mit höher werdenden Ausrichtungsänderungs-Geschwindigkeiten erfolgt.

Die Geschwindigkeit der Änderung der Ausrichtung kann dabei bei maximaler Entfernung des markierten Displaypunkts 4 vom Ziel-Bildpunkt 1 bzw. Fadenkreuzmittelpunkt (als Anker-Displaypunkt) - d.h. bei Markierung äusserer Displaypunkte auf dem Display - maximal vorgegeben sein, und gleich Null gewählt werden, wenn der aktuell markierte Displaypunkt 4 mit dem Ziel-Bildpunkt 1 bzw. Fadenkreuzmittelpunkt als Anker-Displaypunkt zusammenfällt. Das heisst, dass in letzterem Fall keine Änderung der Ausrichtung der Anzieleinheit 13 (also kein Verfahren der Anzieleinheit) erfolgt.

Wie dem
Gemäss der in Figur 3 illustrierten Ausführungsform der Erfindung ist das Display in ein virtuelles Liniennetz 3 eingeteilt, entsprechend digitalisierten Entfernungen und Richtungen von dem Ziel-Bildpunkt 1 bzw. dem Fadenkreuzmittelpunkt zu Gruppen von Displaypunkten. In der Ausführungsform gemäss Figur 3 ist das virtuelle Liniennetz 3 aus konzentrischen Kreislinien 5 um den Fadenkreuzmittelpunkt und diese Kreislinien schneidende, vom Fadenkreuzmittelpunkt ausgehende Radiallinien 6 gebildet, sodass dadurch das Display in - jeweils eine Gruppe von mehreren Displaypunkten enthaltende - Sektoren 7 aufgeteilt ist. Dabei entsprechen die Sektoren 7 jeweils konkreten Werten für die Ausrichtungsänderungs-Richtung und Ausrichtungsänderungs-Geschwindigkeit beim Änderung der Ausrichtung der Anzieleinheit 13 (d.h. dass den innerhalb eines Sektors liegenden Displaypunkten jeweils der gleiche konkrete Wert für die Ausrichtungsänderungs-Richtung und Ausrichtungsänderungs-Geschwindigkeit zugeordnet ist). Die Änderung der Ausrichtung der Anzieleinheit 13, in vertikaler und, insbesondere gleichzeitig, horizontaler Richtung, in Richtung des in einem Sektor gelegenen anderen markierten Bildpunkts 4 entsprechend einem anderen anzuvisierenden Raumpunkt, wird solange vollzogen, wie dieser andere Bildpunkt kontinuierlich markiert wird. Bei Aufhebung der Markierung, beispielsweise bei Aufhebung der Berührung des Bildpunkts 4 auf einem als Touchscreen ausgebildeten Display, wird die Verfahrung der Anzieleinheit 13 abgebrochen. Ein Benutzer kann jedoch jederzeit einen anderen Displaypunkt in einem anderen Sektor 7 markieren bzw. berühren, um eine Änderung der Ausrichtung der Anzieleinheit 13 entsprechend der diesem Sektor zugeordneten Richtung und Geschwindigkeit für das Ändern der Ausrichtung zu veranlassen.

Weiter aussen liegende Sektoren (die einen grösseren Abstand zum Anker-Displaypunkt aufweisen) entsprechen dabei höheren Ausrichtungsänderungs-Geschwindigkeiten und weiter innen liegende Sektoren (die einen kleineren Abstand zum Anker-Displaypunkt aufweisen) entsprechen dabei geringeren Ausrichtungsänderungs-Geschwindigkeiten. Mit zunehmendem Abstand der jeweiligen Sektoren vom Anker-Displaypunkt (d.h. Fadenkreuzmittelpunkt) nimmt also auch die den Sektoren jeweils zugeordnete Ausrichtungsänderungs-Geschwindigkeit zu.

Dabei kann den durch die äusserste Kreislinie definierten Sektoren auch die höchste Verfahrungsgeschwindigkeit (100%) zugeordnet sein und eine Markierung des Anker-Displaypunkts (also des Fadenkreuzmittelpunkts) eine Verfahrungsgeschwindigkeit von 0 % bedeuten.

Jeder Sektor 7 entspricht des Weiteren einer bestimmten - also diesem zugeordneten - Ausrichtungsänderungs-Richtung der Anzieleinheit 13 (azimutal und elevativ). Bei Markierung bzw. Berührung eines Bildpunkts z.B. rechts des Fadenkreuzmittelpunktes wird die Anzieleinrichtung 13 zur Änderung der Ausrichtung in horizontaler Richtung nach rechts bewegt, bis der vorgenannte andere Bildpunkt nicht mehr markiert bzw. berührt wird (beispielsweise weil nun ein weiterer anderer Displaypunkt markiert wird - und dann die Anzieleinheit mit der diesem Displaypunkt zugeordneten Richtung und Geschwindigkeit weiterverfahren bzw. weitergeändert wird - oder kein Punkt mehr markiert wird - und dann das Verfahren der Anzieleinheit gestoppt wird). Die in Figur 3 dargestellte Situation (mit dem dabei dargestellten Punkt als aktuell markierter Displaypunkt 4) entspricht etwa einer Änderung der Ausrichtung der Anzieleinheit 13 mit einer nach schräg rechts oben Ausrichtungsänderungs-Richtung (d.h. einer nach oben zeigenden Richtungsänderungs-Komponente und einer nach rechts zeigenden Richtungsänderungs-Komponente, wobei die nach oben zeigende Komponente etwas grösser gewählt ist als die nach rechts zeigende) sowie mit einer mittleren Verfahr-Geschwindigkeit. Insbesondere können dafür die Drehantriebe derart angesteuert werden, dass die Anzieleinheit gegenüber der Basis mit 60 % der maximal bereitstellbaren Schwenk-Geschwindigkeit nach oben schwenkt und mit 40 % der maximal bereitstellbaren Rotier-Geschwindigkeit um die Stehachse nach rechts dreht.

Insbesondere ist dabei das Liniennetz 3 derart aufgebaut, dass dadurch eine Vielzahl von Sektoren 7 definiert werden, insbesondere mindestens etwa 30 Sektoren, im Speziellen mindestens etwa 50 Sektoren.

Es versteht sich, dass diese dargestellten Figuren nur mögliche Ausführungsbeispiele schematisch darstellen. Die verschiedenen Ansätze können ebenso miteinander sowie mit Verfahren und Geräten des Stands der Technik kombiniert werden.

## Patentansprüche

1. Vermessungsgerät (10) zum Vermessen von Raumpunkten von Oberflächen einer Konstruktion - insbesondere Innenräumen von Gebäuden - mit
• einer Basis (11),
• einer gegenüber der Basis dreh- und schwenkbaren, Distanzmessfunktionalität bereitstellenden Anzieleinheit (13) mit einer zur Emission eines Laserstrahls (14) in Richtung einer Zielachse ausgebildeten Laserquelle und einem Laserlichtdetektor sowie mit einer in Richtung der Zielachse ausgerichteten integrierten digitalen Kamera,
• einer Auswerte- und Steuereinheit,
• einem Display zur Darstellung eines Bildes der Kamera, und
• Eingabemitteln zur Markierung von Displaypunkten auf dem Display,
wobei
• ein erster und ein zweiter Drehantrieb die Anzieleinheit (13) antreib- und ausrichtbar machen,
• eine räumliche Ausrichtung der Anzieleinheit (13) gegenüber der Basis (11) über zwei Winkelmesser erfassbar ist und
• die Auswerte- und Steuereinheit mit der Laserquelle, dem Laserlichtdetektor sowie den Winkelmessern verbunden ist, um eine erfasste Distanz einer entsprechenden Ausrichtung zuzuordnen und somit Koordinaten für Raumpunkte zu bestimmen, sowie mit der Kamera verbunden ist,
**dadurch gekennzeichnet, dass**
das Vermessungsgerät (10) mit einer Funktionalität zur manuell steuerbaren Ausrichtungsänderung der Anzieleinheit (13) ausgestattet ist, in deren Rahmen dynamisch in Abhängigkeit von
• einer fortlaufend bestimmten aktuellen Richtung und
• einem fortlaufend bestimmten aktuellen Abstand
von einem definierten zentralen Anker-Displaypunkt zu einem aktuell markierten Displaypunkt die Ausrichtung der Anzieleinheit (13) durch den ersten bzw. zweiten Drehantrieb geändert wird, wobei
• die jeweils aktuelle Richtung eine Ausrichtungsänderungs-Richtung und
• der jeweils aktuelle Abstand eine Ausrichtungsänderungs-Geschwindigkeit
für das Ändern der Ausrichtung der Anzieleinheit (13) vorgibt.

2. Vermessungsgerät (10) nach Anspruch 1,
**dadurch gekennzeichnet, dass**
jener Displaypunkt als der Anker-Displaypunkt definiert ist, der die Position der Zielachse im Bild und somit einen Ziel-Bildpunkt (1) repräsentiert, insbesondere wobei dieser auf dem Display durch ein dem Bild überlagert darstellbares Fadenkreuz (2) indiziert wird.

3. Vermessungsgerät (10) nach Anspruch 2,
**dadurch gekennzeichnet, dass**
die Funktionalität aktivierbar ist durch Markieren des den Ziel-Bildpunkt (1) darstellenden Displaypunkts bzw. des Fadenkreuzes (2).

4. Vermessungsgerät (10) nach einem der vorangehenden Ansprüche,
**dadurch gekennzeichnet, dass**
das Display als ein berührungssensitiver Touch-Bildschirm ausgebildet ist, auf dem Displaypunkte durch Berührung markierbar sind, und somit die Eingabemittel bereitgestellt werden.

5. Vermessungsgerät (10) nach einem der vorangehenden Ansprüche,
**dadurch gekennzeichnet, dass**
im Rahmen der Funktionalität die Ausrichtungsänderungs-Richtung für das Ändern der Ausrichtung der Anzieleinheit (13) analog ist zur jeweils aktuellen Richtung vom Anker-Displaypunkt zum aktuell markierten Displaypunkt, wobei die Ausrichtungsänderungs-Richtung somit derart gewählt wird, dass diese
• eine nach oben gerichtete Komponente enthält - also eine Schwenkung der Anzieleinheit um eine horizontale Schwenkachse nach oben erfolgt -, falls die aktuelle Richtung vom Anker-Displaypunkt zum aktuell markierten Displaypunkt eine nach oben zeigende Komponente enthält - also falls sich der aktuell markierte Displaypunkt auf dem Display oberhalb des Anker-Displaypunkts befindet -,
• eine nach unten gerichtete Komponente enthält - also eine Schwenkung der Anzieleinheit um die horizontale Schwenkachse nach unten erfolgt -, falls die aktuelle Richtung vom Anker-Displaypunkt zum aktuell markierten Displaypunkt eine nach unten zeigende Komponente enthält - also falls sich der aktuell markierte Displaypunkt auf dem Display unterhalb des Anker-Displaypunkts befindet -,
• eine nach links gerichtete Komponente enthält - also eine Drehung der Anzieleinheit um eine vertikale Drehachse nach links erfolgt -, falls die aktuelle Richtung vom Anker-Displaypunkt zum aktuell markierten Displaypunkt eine nach links zeigende Komponente enthält - also falls sich der aktuell markierte Displaypunkt auf dem Display links des Anker-Displaypunkts liegend befindet -,
• eine nach rechts gerichtete Komponente enthält - also eine Drehung der Anzieleinheit um die vertikale Drehachse nach rechts erfolgt -, falls die aktuelle Richtung vom Anker-Displaypunkt zum aktuell markierten Displaypunkt eine nach rechts zeigende Komponente enthält - also falls sich der aktuell markierte Displaypunkt auf dem Display rechts des Anker-Displaypunkts liegend befindet.

6. Vermessungsgerät (10) nach einem der vorangehenden Ansprüche,
**dadurch gekennzeichnet, dass**
im Rahmen der Funktionalität
• die Ausrichtungsänderungs-Geschwindigkeit maximal ist, falls auch der aktuelle Abstand vom Anker-Displaypunkt zum aktuell markierten Displaypunkt maximal ist, und
• bei Zusammenfallen des aktuell markierten Displaypunkts mit dem Anker-Displaypunkt die Ausrichtungsänderungs-Geschwindigkeit gleich Null ist, d.h. dass dann in der aktuellen Ausrichtung der Anzieleinheit innegehalten wird.

7. Vermessungsgerät (10) nach einem der vorangehenden Ansprüche,
**dadurch gekennzeichnet, dass**
das Display mittels eines um den Anker-Displaypunkt angelegten virtuellen Liniennetzes (3) in virtuelle Sektoren (7) eingeteilt ist, welches durch konzentrische Kreislinien (5) um den Anker-Displaypunkt und diese Kreislinien (5) schneidende, von dem Anker-Displaypunkt ausgehende Radiallinien (6) gebildet wird, wobei die Sektoren (7) digitalisierten Werten für die Ausrichtungsänderungs-Richtung und die Ausrichtungsänderungs-Geschwindigkeit entsprechen und das Ändern der Ausrichtung der Anzieleinheit (13) mit der dem jeweiligen Sektor zugeordneten Ausrichtungsänderungs-Richtung und Ausrichtungsänderungs-Geschwindigkeit solange vollzogen wird, wie einer der innerhalb dieses Sektors liegenden Displaypunkte markiert wird, und die Ausrichtungsänderungs-Richtung und Ausrichtungsänderungs-Geschwindigkeit entsprechend geändert wird, sobald ein innerhalb eines anderen Sektors liegender Displaypunkt markiert wird, nämlich auf die dem anderen Sektor entsprechende Ausrichtungsänderungs-Richtung bzw. Ausrichtungsänderungs-Geschwindigkeit.

8. Vermessungsgerät (10) nach Anspruch 7,
**dadurch gekennzeichnet, dass**
die konzentrischen Kreislinien (5) um Anker-Displaypunkt unterschiedlichen Abständen vom aktuell markierten Displaypunkt zum Anker-Displaypunkt entsprechen, womit Ausrichtungsänderungs-Geschwindigkeitsstufen festgelegt werden, wobei die äussersten Sektoren der maximalen Ausrichtungsänderungs-Geschwindigkeit entsprechen.

9. Vermessungsgerät (10) nach Anspruch 7 oder 8,
**dadurch gekennzeichnet, dass**
das virtuelle Liniennetz (3) derart aufgebaut, dass dadurch eine Vielzahl von Sektoren (7) definiert werden, insbesondere mindestens etwa 30 Sektoren (7), im Speziellen mindestens etwa 50 Sektoren (7).

10. Verfahren zum manuell gesteuerten Ausrichten einer Anzieleinheit (13) eines Vermessungsgeräts (10) anhand eines Markierens von Displaypunkten auf einem Display, wobei das Vermessungsgerät (10) aufweist
• eine Basis (11),
• die gegenüber der Basis dreh- und schwenkbare, Distanzmessfunktionalität bereitstellende Anzieleinheit (13) mit einer zur Emission eines Laserstrahls (14) in Richtung einer Zielachse ausgebildeten Laserquelle und einem Laserlichtdetektor sowie mit einer in Richtung der Zielachse ausgerichteten integrierten digitalen Kamera,
• einer Auswerte- und Steuereinheit,
• das Display zur Darstellung eines Bildes der Kamera, und
• Eingabemitteln zur Markierung der Displaypunkte,
wobei
• ein erster und ein zweiter Drehantrieb die Anzieleinheit (13) antreib- und ausrichtbar machen,
• eine räumliche Ausrichtung der Anzieleinheit (13) gegenüber der Basis (11) über zwei Winkelmesser erfassbar ist und
• die Auswerte- und Steuereinheit mit der Laserquelle, dem Laserlichtdetektor sowie den Winkelmessern verbunden ist, um eine erfasste Distanz einer entsprechenden Ausrichtung zuzuordnen und somit Koordinaten für Raumpunkte zu bestimmen, sowie mit der Kamera verbunden ist,
**dadurch gekennzeichnet, dass**
fortlaufend
• eine aktuelle Richtung und
• ein aktueller Abstand
von einem definierten zentralen Anker-Displaypunkt zu einem aktuell markierten Displaypunkt bestimmt werden und ein Ändern der Ausrichtung der Anzieleinheit (13) dynamisch in Abhängigkeit von der jeweils aktuellen Richtung und dem jeweils aktuellen Abstand durch den ersten bzw. zweiten Drehantrieb erfolgt, wobei
• die jeweils aktuelle Richtung eine Ausrichtungsänderungs-Richtung und
• der jeweils aktuelle Abstand eine Ausrichtungsänderungs-Geschwindigkeit
für das Ändern der Ausrichtung der Anzieleinheit (13) vorgibt.

11. Verfahren nach Anspruch 10,
**dadurch gekennzeichnet, dass**
jener Displaypunkt als der Anker-Displaypunkt definiert ist, der die Position der Zielachse im Bild und somit einen Ziel-Bildpunkt (1) repräsentiert, insbesondere wobei dieser auf dem Display durch ein dem Bild überlagert darstellbares Fadenkreuz (2) indiziert wird.

12. Verfahren nach einem der Ansprüche 10 bis 11,
**dadurch gekennzeichnet, dass**
die Ausrichtungsänderungs-Richtung für das Ändern der Ausrichtung der Anzieleinheit (13) analog gewählt wird zur jeweils bestimmten aktuellen Richtung vom Anker-Displaypunkt zum aktuell markierten Displaypunkt, wobei
• die Ausrichtungsänderungs-Richtung eine nach oben gerichtete Komponente enthält - also eine Schwenkung der Anzieleinheit um eine horizontale Schwenkachse nach oben erfolgt -, falls die aktuelle Richtung vom Anker-Displaypunkt zum aktuell markierten Displaypunkt eine nach oben zeigende Komponente enthält - also falls sich der aktuell markierte Displaypunkt auf dem Display oberhalb des Anker-Displaypunkts befindet -,
• die Ausrichtungsänderungs-Richtung eine nach unten gerichtete Komponente enthält - also eine Schwenkung der Anzieleinheit um die horizontale Schwenkachse nach unten erfolgt -, falls die aktuelle Richtung vom Anker-Displaypunkt zum aktuell markierten Displaypunkt eine nach unten zeigende Komponente enthält - also falls sich der aktuell markierte Displaypunkt auf dem Display unterhalb des Anker-Displaypunkts befindet -,
• die Ausrichtungsänderungs-Richtung eine nach links gerichtete Komponente enthält - also eine Drehung der Anzieleinheit um eine vertikale Drehachse nach links erfolgt -, falls die aktuelle Richtung vom Anker-Displaypunkt zum aktuell markierten Displaypunkt eine nach links zeigende Komponente enthält - also falls sich der aktuell markierte Displaypunkt auf dem Display links des Anker-Displaypunkts liegend befindet -, und
• die Ausrichtungsänderungs-Richtung eine nach rechts gerichtete Komponente enthält - also eine Drehung der Anzieleinheit um eine vertikale Drehachse nach rechts erfolgt -, falls die aktuelle Richtung vom Anker-Displaypunkt zum aktuell markierten Displaypunkt eine nach rechts zeigende Komponente enthält - also falls sich der aktuell markierte Displaypunkt auf dem Display rechts des Anker-Displaypunkts liegend befindet.

13. Verfahren nach einem der Ansprüche 10 bis 12,
**dadurch gekennzeichnet, dass**
• die Ausrichtungsänderungs-Geschwindigkeit maximal ist, falls der aktuelle Abstand vom aktuell markierten Displaypunkt zum Anker-Displaypunkt maximal ist, und
• bei Zusammenfallen des aktuell markierten Displaypunkts mit dem Anker-Displaypunkt die Ausrichtungsänderungs-Geschwindigkeit gleich Null ist, d.h. dass dann in der aktuellen Ausrichtung der Anzieleinheit innegehalten wird.

14. Verfahren nach einem der Ansprüche 10 bis 13,
**dadurch gekennzeichnet, dass**
das Display mittels eines um den Anker-Displaypunkt angelegten virtuellen Liniennetzes (3) in virtuelle Sektoren (7) eingeteilt ist, welches durch konzentrische Kreislinien (5) um den Anker-Displaypunkt und diese Kreislinien (5) schneidende, von dem Anker-Displaypunkt ausgehende Radiallinien (6) gebildet wird, wobei die Sektoren (7) digitalisierten Werten für die Ausrichtungsänderungs-Richtung und die Ausrichtungsänderungs-Geschwindigkeit entsprechen und das Ändern der Ausrichtung der Anzieleinheit (13) mit der dem jeweiligen Sektor zugeordneten Ausrichtungsänderungs-Richtung und Ausrichtungsänderungs-Geschwindigkeit solange vollzogen wird, wie einer der innerhalb dieses Sektors liegenden Displaypunkte markiert wird, und die Ausrichtungsänderungs-Richtung und Ausrichtungsänderungs-Geschwindigkeit entsprechend geändert wird, sobald ein innerhalb eines anderen Sektors liegender Displaypunkt markiert wird, nämlich auf die dem anderen Sektor entsprechende Ausrichtungsänderungs-Richtung bzw. Ausrichtungsänderungs-Geschwindigkeit.

15. Computerprogrammprodukt mit Programmcode, der auf einem maschinenlesbaren Träger gespeichert ist, zur Durchführung des Verfahrens zum manuell gesteuerten Ausrichten einer Anzieleinheit (13) eines Vermessungsgeräts (10) anhand eines Markierens von Displaypunkten auf einem Display nach einem der Ansprüche 10 bis 14, insbesondere wenn das Programm auf einer als Auswerte- und Steuereinheit des Vermessungsgeräts (10) nach einem der Ansprüche 1 bis 9 ausgebildeten elektronischen Datenverarbeitungseinheit ausgeführt wird.

## Claims

1. A measuring appliance (10) for measuring spatial points of surfaces of a construction - in particular interiors of buildings - comprising
• a base (11),
• a sighting unit (13), which is rotatable and pivotable relative to the base and provides distance measuring functionality, having a laser source designed to emit a laser beam (14) in the direction of an aiming axis, and a laser light detector and also having an integrated digital camera aligned in the direction of the aiming axis,
• an evaluation and control unit,
• a display for representing an image of the camera, and
• input means for marking display points on the display,
wherein
• a first and a second rotary drive make the sighting unit (13) drivable and alignable,
• a spatial alignment of the sighting unit (13) relative to the base (11) is detectable by means of two goniometers, and
• the evaluation and control unit is connected to the laser source, the laser light detector and also the goniometers in order to assign a detected distance to a corresponding alignment and thus to determine coordinates for spatial points, and is also connected to the camera,
**characterized in that**
the measuring appliance (10) is equipped with a functionality for changing the alignment of the sighting unit (13) in a manually controllable manner, in the context of which dynamically in a manner dependent on
• a constantly determined current direction and
• a constantly determined current distance
from a defined central anchor display point to a currently marked display point, the alignment of the sighting unit (13) is changed by the first and/or second rotary drive, wherein
• the respective current direction predefines an alignment change direction and
• the respective current distance predefines an alignment change speed
for changing the alignment of the sighting unit (13).

2. The measuring appliance (10) as claimed in claim 1,
**characterized in that**
the anchor display point is defined as that display point which represents the position of the aiming axis in the image and thus a target image point (1), in particular wherein the latter is indicated on the display by a reticle (2) that can be represented in a manner superimposed on the image.

3. The measuring appliance (10) as claimed in claim 2,
**characterized in that**
the functionality can be activated by marking the reticle (2) or the display point representing the target image point (1).

4. The measuring appliance (10) as claimed in any one of the preceding claims,
**characterized in that**
the display is embodied as a touch-sensitive touchscreen, on which display points can be marked by touch, and the input means are thereby provided.

5. The measuring appliance (10) as claimed in any one of the preceding claims,
**characterized in that**
in the context of the functionality, the alignment change direction for changing the alignment of the sighting unit (13) is analogous to the respective current direction from the anchor display point to the currently marked display point, wherein the alignment change direction is thus chosen in such a way that it
• contains an upwardly directed component - that is to say the sighting unit is pivoted upward about a horizontal pivoting axis - if the current direction from the anchor display point to the currently marked display point contains an upwardly pointing component - that is to say if the currently marked display point on the display is situated above the anchor display point,
• contains a downwardly directed component - that is to say the sighting unit is pivoted downward about the horizontal pivoting axis - if the current direction from the anchor display point to the currently marked display point contains a downwardly pointing component - that is to say if the currently marked display point on the display is situated below the anchor display point,
• contains a leftward directed component - that is to say the sighting unit is rotated leftward about a vertical rotation axis - if the current direction from the anchor display point to the currently marked display point contains a leftward pointing component - that is to say if the currently marked display point on the display is situated to the left of the anchor display point,
• contains a rightward directed component - that is to say the sighting unit is rotated rightward about the vertical rotation axis - if the current direction from the anchor display point to the currently marked display point contains a rightward pointing component - that is to say if the currently marked display point on the display is situated to the right of the anchor display point.

6. The measuring appliance (10) as claimed in any one of the preceding claims,
**characterized in that**
in the context of the functionality
• the alignment change speed is maximal if the current distance from the anchor display point to the currently marked display point is also maximal, and
• when the currently marked display point coincides with the anchor display point, the alignment change speed is equal to zero, that is to say that a pause is then made in the current alignment of the sighting unit.

7. The measuring appliance (10) as claimed in any one of the preceding claims,
**characterized in that**
the display is subdivided into virtual sectors (7) by means of a virtual line grid (3) placed around the anchor display point, said grid being formed by concentric circular lines (5) around the anchor display point and radial lines (6) which proceed from the anchor display point and intersect said circular lines (5), wherein the sectors (7) correspond to digitized values for the alignment change direction and the alignment change speed and the alignment of the sighting unit (13) is changed with the alignment change direction and alignment change speed assigned to the respective sector for as long as one of the display points lying within said sector is marked, and the alignment change direction and alignment change speed are correspondingly changed as soon as a display point lying within a different sector is marked, namely to the alignment change direction and respectively alignment change speed corresponding to the different sector.

8. The measuring appliance (10) as claimed in claim 7,
**characterized in that**
the concentric circular lines (5) around the anchor display point correspond to different distances from the currently marked display point to the anchor display point, whereby alignment change speed levels are defined, wherein the outermost sectors correspond to the maximum alignment change speed.

9. The measuring appliance (10) as claimed in claim 7 or 8,
**characterized in that**
the virtual line grid (3) is established in such a way that a multiplicity of sectors (7) are defined thereby, in particular at least approximately 30 sectors (7), specifically at least approximately 50 sectors (7).

10. A method for the manually controlled alignment of a sighting unit (13) of a measuring appliance (10) on the basis of marking display points on a display, wherein the measuring appliance (10) comprises
• a base (11),
• sighting unit (13), which is rotatable and pivotable relative to the base and provides distance measuring functionality, having a laser source designed to emit a laser beam (14) in the direction of an aiming axis, and a laser light detector and also having an integrated digital camera aligned in the direction of the aiming axis,
• an evaluation and control unit,
• the display for representing an image of the camera, and
• input means for marking the display points,
wherein
• a first and a second rotary drive make the sighting unit (13) drivable and alignable,
• a spatial alignment of the sighting unit (13) relative to the base (11) is detectable by means of two goniometers, and
• the evaluation and control unit is connected to the laser source, the laser light detector and also the goniometers in order to assign a detected distance to a corresponding alignment and thus to determine coordinates for spatial points, and is also connected to the camera,
**characterized in that**
constantly
• a current direction and
• a current distance
from a defined central anchor display point to a currently marked display point are determined and the alignment of the sighting unit (13) is changed dynamically in a manner dependent on the respective current direction and the respective current distance by the first and/or second rotary drive, wherein
• the respective current direction predefines an alignment change direction and
• the respective current distance predefines an alignment change speed
for changing the alignment of the sighting unit (13).

11. The method as claimed in claim 10,
**characterized in that**
the anchor display point is defined as that display point which represents the position of the aiming axis in the image and thus a target image point (1), in particular wherein the latter is indicated on the display by a reticle (2) that can be represented in a manner superimposed on the image.

12. The method as claimed in either of claims 10 and 11,
**characterized in that**
the alignment change direction for changing the alignment of the sighting unit (13) is chosen analogously to the respective determined current direction from the anchor display point to the currently marked display point, wherein
• the alignment change direction contains an upwardly directed component - that is to say the sighting unit is pivoted upward about a horizontal pivoting axis - if the current direction from the anchor display point to the currently marked display point contains an upwardly pointing component - that is to say if the currently marked display point on the display is situated above the anchor display point,
• the alignment change direction contains a downwardly directed component - that is to say the sighting unit is pivoted downward about the horizontal pivoting axis - if the current direction from the anchor display point to the currently marked display point contains a downwardly pointing component - that is to say if the currently marked display point on the display is situated below the anchor display point,
• the alignment change direction contains a leftward directed component - that is to say the sighting unit is rotated leftward about a vertical rotation axis - if the current direction from the anchor display point to the currently marked display point contains a leftward pointing component - that is to say if the currently marked display point on the display is situated to the left of the anchor display point, and
• the alignment change direction contains a rightward directed component - that is to say the sighting unit is rotated rightward about a vertical rotation axis - if the current direction from the anchor display point to the currently marked display point contains a rightward pointing component - that is to say if the currently marked display point on the display is situated to the right of the anchor display point.

13. The method as claimed in any one of claims 10 to 12,
**characterized in that**
• the alignment change speed is maximal if the current distance from the currently marked display point to the anchor display point is maximal, and
• when the currently marked display point coincides with the anchor display point, the alignment change speed is equal to zero, that is to say that a pause is then made in the current alignment of the sighting unit.

14. The method as claimed in any one of claims 10 to 13,
**characterized in that**
the display is subdivided into virtual sectors (7) by means of a virtual line grid (3) placed around the anchor display point, said grid being formed by concentric circular lines (5) around the anchor display point and radial lines (6) which proceed from the anchor display point and intersect said circular lines (5), wherein the sectors (7) correspond to digitized values for the alignment change direction and the alignment change speed and the alignment of the sighting unit (13) is changed with the alignment change direction and alignment change speed assigned to the respective sector for as long as one of the display points lying within said sector is marked, and the alignment change direction and alignment change speed are correspondingly changed as soon as a display point lying within a different sector is marked, namely to the alignment change direction and respectively alignment change speed corresponding to the different sector.

15. A computer program product comprising program code, stored on a machine-readable carrier, for carrying out the method for the manually controlled alignment of a sighting unit (13) of a measuring appliance (10) on the basis of marking display points on a display as claimed in any one of claims 10 to 14, in particular if the program is executed on an electronic data processing unit embodied as an evaluation and control unit of the measuring appliance (10) as claimed in any one of claims 1 to 9.

## Revendications

1. Appareil de mesure (10) pour mesurer des points dans l'espace de surfaces d'une construction - notamment des espaces intérieurs de bâtiments - comportant
• une base (11),
• une unité de pointage (13) pouvant tourner et pivoter par rapport à la base et fournissant une fonctionnalité de mesure de distance, comportant une source laser conçue pour émettre un faisceau laser (14) dans la direction d'un axe de pointage et un détecteur de lumière laser et comportant une caméra numérique intégrée orientée dans la direction de l'axe de pointage,
• une unité d'évaluation et de commande,
• un afficheur pour représenter une image de la caméra, et
• des moyens d'entrée pour marquer des points d'affichage sur l'afficheur,
dans lequel
• des premier et deuxième entraînements en rotation permettent d'entraîner et d'orienter l'unité de pointage (13),
• une orientation spatiale de l'unité de pointage (13) par rapport à la base (11) peut être détectée par l'intermédiaire de deux dispositifs de mesure angulaire et
• l'unité d'évaluation et de commande est reliée à la source laser, au détecteur de lumière laser ainsi qu'aux dispositifs de mesure angulaire pour associer une distance détectée à une orientation correspondante et par conséquent, pour déterminer des coordonnées des points dans l'espace, et est reliée à la caméra,
**caractérisé en ce que** l'appareil de mesure (10) est doté d'une fonctionnalité permettant de modifier manuellement l'orientation de l'unité de pointage (13) d'une manière pouvant être commandée, dans le cadre de laquelle l'orientation de l'unité de pointage (13) est modifiée dynamiquement par le premier ou le deuxième entraînement en rotation en fonction
• d'une direction actuelle déterminée en continu et
• d'une distance actuelle déterminée en continu
d'un point d'affichage d'ancrage central défini à un point d'affichage marqué actuel, dans lequel
• la direction actuelle respective prédéfinit une direction de modification d'orientation et
• la distance actuelle respective prédéfinit une vitesse de modification d'orientation
pour la modification de l'orientation de l'unité de pointage (13).

2. Appareil de mesure (10) selon la revendication 1,
**caractérisé en ce que** le point d'affichage qui représente la position de l'axe de pointage dans l'image et par conséquent, un pixel cible (1), est défini en tant que point d'affichage d'ancrage, notamment dans lequel celui-ci est indexé sur l'afficheur par un réticule (2) pouvant être représenté de manière superposée à l'image.

3. Appareil de mesure (10) selon la revendication 2, **caractérisé en ce que** la fonctionnalité peut être activée par marquage du point d'affichage ou du réticule (2) représentant le pixel cible (1).

4. Appareil de mesure (10) selon l'une quelconque des revendications précédentes, **caractérisé en ce que** l'afficheur est réalisé sous la forme d'un écran tactile sensible au toucher sur lequel des points d'affichage peuvent être marqués par contact et sur lequel les moyens d'entrée sont par conséquent présents.

5. Appareil de mesure (10) selon l'une quelconque des revendications précédentes,
**caractérisé en ce que**, dans le cadre de la fonctionnalité, la direction de modification d'orientation pour la modification de l'orientation de l'unité de pointage (13) est analogique par rapport à la direction actuelle respective du point d'affichage d'ancrage au point d'affichage marqué actuel, dans lequel la direction de modification d'orientation est par conséquent sélectionnée de manière à ce qu'elle
• contienne une composante dirigée vers le haut - et par conséquent, qu'un pivotement de l'unité de pointage soit effectué vers le haut autour d'un axe de pivotement horizontal -, dans le cas où la direction actuelle du point d'affichage d'ancrage au point d'affichage marqué actuel contient une composante pointant vers le haut - et par conséquent, dans le cas où le point d'affichage marqué actuel sur l'afficheur se trouve au-dessus du point d'affichage d'ancrage -,
• contienne une composante dirigée vers le bas - et par conséquent, qu'un pivotement de l'unité de pointage soit effectué vers le bas autour de l'axe de pivotement horizontal -, dans le cas où la direction actuelle du point d'affichage d'ancrage au point d'affichage marqué actuel contient une composante pointant vers le bas - et par conséquent, dans le cas où le point d'affichage marqué actuel sur l'afficheur se trouve en-dessous du point d'affichage d'ancrage -,
• contienne une composante dirigée vers la gauche - et par conséquent, qu'une rotation de l'unité de pointage soit effectuée vers la gauche autour d'un axe de rotation vertical -, dans le cas où la direction actuelle du point d'affichage d'ancrage au point d'affichage marqué actuel contient une composante pointant vers la gauche - et par conséquent, dans le cas où le point d'affichage marqué actuel sur l'afficheur est situé à gauche du point d'affichage d'ancrage -,
• contienne une composante dirigée vers la droite - et par conséquent, qu'une rotation de l'unité de pointage soit effectuée vers la droite autour de l'axe de rotation vertical -, dans le cas où la direction actuelle du point d'affichage d'ancrage au point d'affichage marqué actuel contient une composante pointant vers la droite - et par conséquent, dans le cas où le point d'affichage marqué actuel sur l'afficheur se situe à droite du point d'affichage d'ancrage.

6. Appareil de mesure (10) selon l'une quelconque des revendications précédentes, **caractérisé en ce que**, dans le cadre de la fonctionnalité,
• la vitesse de modification d'orientation est maximale dans le cas où la distance actuelle du point d'affichage d'ancrage au point d'affichage marqué actuel est également maximale, et
• lors d'une coïncidence entre le point d'affichage marqué actuel et le point d'affichage d'ancrage, la vitesse de modification d'orientation est égale à zéro, c'est-à-dire que l'unité de pointage est alors maintenue dans son orientation actuelle.

7. Appareil de mesure (10) selon l'une quelconque des revendications précédentes, **caractérisé en ce que** l'afficheur est subdivisé en des secteurs virtuels (7) au moyen d'un réseau virtuel de lignes (3) appliqué autour du point d'affichage d'ancrage, lequel réseau virtuel de lignes est formé par des circonférences concentriques (5) autour du point d'affichage d'ancrage et par des lignes radiales (6) coupant lesdites circonférences (5) et partant du point d'affichage d'ancrage, dans lequel les secteurs (7) correspondent à des valeurs numérisées pour la direction de modification d'orientation et pour la vitesse de modification d'orientation, et la modification de l'orientation de l'unité de pointage (13) selon la direction de modification d'orientation et la vitesse de modification d'orientation associées au secteur respectif est effectuée tant que l'un des points d'affichage situés à l'intérieur dudit secteur est marqué, et la direction de modification d'orientation et la vitesse de modification d'orientation sont modifiées de manière correspondante dès qu'un point d'affichage se situant à l'intérieur d'un autre secteur est marqué, à savoir dans la direction de modification d'orientation ou à la vitesse de modification d'orientation correspondant à l'autre secteur.

8. Appareil de mesure (10) selon la revendication 7, **caractérisé en ce que** les circonférences concentriques (5) autour du point d'affichage d'ancrage correspondent à des distances différentes du point d'affichage marqué actuel au point d'affichage d'ancrage, de telle sorte que des pas de vitesse de modification d'orientation sont établis, dans lequel les secteurs les plus extérieurs correspondent à la vitesse de modification d'orientation maximale.

9. Appareil de mesure (10) selon la revendication 7 ou 8, **caractérisé en ce que** le réseau virtuel de lignes (3) est réalisé de manière à définir ainsi une pluralité de secteurs (7), notamment au moins environ 30-secteurs (7), en particulier, au moins environ 50 secteurs (7).

10. Procédé pour l'orientation commandée manuellement d'une unité de pointage (13) d'un appareil de mesure (10) sur la base d'un marquage de points d'affichage sur un afficheur, dans lequel l'appareil de mesure (10) comporte
• une base (11),
• l'unité de pointage (13) pouvant tourner et pivoter par rapport à la base et fournissant une fonctionnalité de mesure de distance, comportant une source laser conçue pour émettre un faisceau laser (14) dans la direction d'un axe de pointage et un détecteur de lumière laser et comportant une caméra numérique intégrée orientée dans la direction de l'axe de pointage,
• une unité d'évaluation et de commande,
• l'afficheur pour représenter une image de la caméra, et
• des moyens d'entrée pour marquer les points d'affichage,
dans lequel
• des premier et deuxième entraînements en rotation permettent d'entraîner et d'orienter l'unité de pointage (13),
• une orientation spatiale de l'unité de pointage (13) par rapport à la base (11) peut être détectée par l'intermédiaire de deux dispositifs de mesure angulaire et
• l'unité d'évaluation et de commande est reliée à la source laser, au détecteur de lumière laser ainsi qu'aux dispositifs de mesure angulaire pour associer une distance détectée à une orientation correspondante et par conséquent, pour déterminer des coordonnées des points dans l'espace, et est reliée à la caméra,
**caractérisé en ce que**,
de manière continue,
• une direction actuelle et
• une distance actuelle
d'un point d'affichage d'ancrage central défini à un point d'affichage marqué actuel sont déterminées et une modification de l'orientation de l'unité de pointage (13) est effectuée dynamiquement en fonction de la direction actuelle respective et de la distance actuelle respective par le premier ou le deuxième entraînement en rotation, dans lequel
• la direction actuelle respective prédéfinit une direction de modification d'orientation et
• la distance actuelle respective prédéfinit une vitesse de modification d'orientation
pour la modification de l'orientation de l'unité de pointage (13).

11. Procédé selon la revendication 10,
**caractérisé en ce que** le point d'affichage qui représente la position de l'axe de pointage dans l'image et par conséquent, un pixel cible (1), est défini en tant que point d'affichage d'ancrage, notamment dans lequel celui-ci est indexé sur l'afficheur par un réticule (2) pouvant être représenté de manière superposée à l'image.

12. Procédé selon l'une quelconque des revendications 10 à 11,
**caractérisé en ce que** la direction de modification d'orientation pour la modification de l'orientation de l'unité de pointage (13) est sélectionnée de manière analogique par rapport à la direction actuelle respective déterminée du point d'affichage d'ancrage au point d'affichage marqué actuel, dans lequel
• la direction de modification d'orientation contient une composante dirigée vers le haut - et par conséquent, un pivotement de l'unité de pointage est effectué vers le haut autour d'un axe de pivotement horizontal -, dans le cas où la direction actuelle du point d'affichage d'ancrage au point d'affichage marqué actuel contient une composante pointant vers le haut - et par conséquent, dans le cas où le point d'affichage marqué actuel sur l'afficheur se trouve au-dessus du point d'affichage d'ancrage -,
• la direction de modification d'orientation contient une composante dirigée vers le bas - et par conséquent, un pivotement de l'unité de pointage est effectué vers le bas autour de l'axe de pivotement horizontal -, dans le cas où la direction actuelle du point d'affichage d'ancrage au point d'affichage marqué actuel contient une composante pointant vers le bas - et par conséquent, dans le cas où le point d'affichage marqué actuel sur l'afficheur se trouve en-dessous du point d'affichage d'ancrage -,
• la direction de modification d'orientation contient une composante dirigée vers la gauche - et par conséquent, une rotation de l'unité de pointage est effectuée vers la gauche autour d'un axe de rotation vertical -, dans le cas où la direction actuelle du point d'affichage d'ancrage au point d'affichage marqué actuel contient une composante pointant vers la gauche - et par conséquent, dans le cas où le point d'affichage marqué actuel sur l'afficheur est situé à gauche du point d'affichage d'ancrage -, et
• la direction de modification d'orientation contient une composante dirigée vers la droite - et par conséquent, une rotation de l'unité de pointage est effectuée vers la droite autour d'un axe de rotation vertical -, dans le cas où la direction actuelle du point d'affichage d'ancrage au point d'affichage marqué actuel contient une composante pointant vers la droite - et par conséquent, dans le cas où le point d'affichage marqué actuel sur l'afficheur se situe à droite du point d'affichage d'ancrage.

13. Procédé selon l'une quelconque des revendications 10 à 12, **caractérisé en ce que**
• la vitesse de modification d'orientation est maximale dans le cas où la distance actuelle du point d'affichage marqué actuel au point d'affichage d'ancrage est maximale, et
• lors d'une coïncidence entre le point d'affichage marqué actuel et le point d'affichage d'ancrage, la vitesse de modification d'orientation est égale à zéro, c'est-à-dire que l'unité de pointage est alors maintenue dans son orientation actuelle.

14. Procédé selon l'une quelconque des revendications 10 à 13,
**caractérisé en ce que** l'afficheur est subdivisé en des secteurs virtuels (7) au moyen d'un réseau virtuel de lignes (3) appliqué autour du point d'affichage d'ancrage, lequel réseau virtuel de lignes est formé par des circonférences concentriques (5) autour du point d'affichage d'ancrage et par des lignes radiales (6) coupant lesdites circonférences (5) et partant du point d'affichage d'ancrage, dans lequel les secteurs (7) correspondent à des valeurs numérisées pour la direction de modification d'orientation et pour la vitesse de modification d'orientation, et la modification de l'orientation de l'unité de pointage (13) selon la direction de modification d'orientation et la vitesse de modification d'orientation associées au secteur respectif est effectuée tant que l'un des points d'affichage situés à l'intérieur dudit secteur est marqué, et la direction de modification d'orientation et la vitesse de modification d'orientation sont modifiées de manière correspondante dès qu'un point d'affichage se situant à l'intérieur d'un autre secteur est marqué, à savoir dans la direction de modification d'orientation ou à la vitesse de modification d'orientation correspondant à l'autre secteur.

15. Produit de programme d'ordinateur comportant un code de programme qui est stocké sur un support lisible par machine, pour mettre en oeuvre le procédé d'orientation commandée manuellement d'une unité de pointage (13) d'un appareil de mesure (10) sur la base d'un marquage de points d'affichage sur un afficheur selon l'une quelconque des revendications 10 à 14, notamment lorsque le programme est exécuté sur une unité de traitement de données électronique réalisée sous la forme de l'unité d'évaluation et de commande de l'appareil de mesure (10) selon l'une quelconque des revendications 1 à 9.
